# EUROPÄISCHE PATENTANMELDUNG

(11) **EP 1 544 565 A2**
(43) Veröffentlichungstag der Anmeldung: **22.06.2005**
(21) Anmeldenummer: 04029648.5
(22) Anmeldetag: 15.12.2004
(51) Int. Cl.: F28F 21/04, F28D 9/00, F28F 3/04

(54) **Platten-Wärmeübertrager, Verfahren zur Herstellung eines Platten-Wärmeübertragers und keramischer Faserverbundwerkstoff, insbesondere für einen Platten-Wärmeübertrager**

(30) Priorität: 16.12.2003 DE 10361346
(71) Anmelder: Deutsches Zentrum für Luft- und Raumfahrt e.V., 53175 Bonn (DE)
(72) Erfinder: Schulte-Fischedick, Jan, 71364 Winnenden (DE); Schmidt, Jens, Dr., 70736 Fellbach (DE); Tamme, Rainer, Dr., 73760 Ostfildern (DE); Kröner, Ulrike, 71665 Vaihingen-Riet (DE); Scheiffele, Matthias, 73035 Göppingen (DE)
(74) Vertreter: HOEGER, STELLRECHT & PARTNER Patentanwälte

(57) **Zusammenfassung**

Platten-Wärmeübertrager, welcher eine Mehrzahl von Platten (32,48) umfaßt, in welchen Kanäle (34,54) gebildet sind, wobei die Platten (32,48) aus einem mit Kurzfasern verstärkten Faserverbundwerkstoff hergestellt sind oder aus Siliciumcarbid hergestellt sind oder aus Siliciumnitrid hergestellt sind.

## Beschreibung

Die Erfindung betrifft einen Platten-Wärmeübertrager.

Die Erfindung betrifft ferner ein Verfahren zur Herstellung eines Platten-Wärmeübertragers.

Die Erfindung betrifft ferner einen keramischen Faserverbundwerkstoff, insbesondere für einen Platten-Wärmeübertrager, mit einer Faserstruktur und einer Matrixstruktur, wobei die Faserstruktur und die Matrixstruktur kohlenstoffbasiert sind.

Aus der Monografie "Ceramic heat exchanger concepts and materials technology" von C. Bliem, Noyes Publications, Park Ridge, New Jersey, USA, 1985 ist ein Platten-Wärmeübertrager aus monolithischem Cordierit bekannt.

Solche Platten-Wärmeübertrager können beispielsweise bei der Verstromung von Kohle, Biomasse oder Reststoffen eingesetzt werden. In einem solchen Wärmeübertrager findet ein Wärmeübertrag von einem bei der Verbrennung entstehenden Rauchgas auf ein Prozeßgas wie Luft statt, wobei die Luft einer Gasturbine zugeführt wird.

Der Erfindung liegt die Aufgabe zugrunde, einen Platten-Wärmeübertrager bereitzustellen, welcher bei hohen Temperaturen einsetzbar ist.

Diese Aufgabe wird erfindungsgemäß dadurch gelöst, daß der Platten-Wärmeübertrager eine Mehrzahl von Platten umfaßt, in welchen Kanäle gebildet sind, wobei die Platten aus einem mit Kurzfasern verstärkten Faserverbundwerkstoff hergestellt sind oder aus Siliciumcarbid hergestellt sind oder aus Siliciumnitrid hergestellt sind.

Bei extern befeuerten Kombiprozessen wie dem EFGT-Prozeß (Externally fired gas turbine-Prozeß) können Temperaturen in der Größenordnung von 1000°C bis 1500°C auftreten. Ein entsprechender Wärmeübertrager muß deshalb aus keramischen Materialien gefertigt werden. Es hat sich gezeigt, daß monolithische Keramiken wie Cordierit aufgrund ihrer hohen Sprödigkeit sowie einem Versagen "ohne vorherige Ankündigung" es erforderlich machen, daß bei der Auslegung hohe Sicherheitsfaktoren berücksichtigt werden müssen.

Bei der Verwendung eines kurzfaserverstärkten Faserverbundwerkstoffes und insbesondere kurzfaserverstärktem C/C-SiC-Material ist die Sprödigkeit stark verringert, wobei eine Hochtemperaturbeständigkeit gewährleistbar ist.

Unter Kurzfasern werden üblicherweise Fasern mit einer Fasernlänge kleiner 40 mm verstanden. Im Gegensatz dazu stehen Endlosfasern, die in einem Bauteil die Länge des Bauteils durchsetzen. Insbesondere ist die Faserlänge bei Kurzfasern kleiner 5 mm. Vorzugsweise wird die Faserlänge kleiner als die kleinste geometrische Länge von Strukturen einer Platte gewählt, wobei es sich insbesondere um Strukturen handelt, welche Kanäle bilden bzw. welche Führungen wie Nuten bilden, über die Platten aufeinandergestapelt werden können.

Es lassen sich die Platten bei der Herstellung auf einfache Weise strukturieren, indem beispielsweise die Kanäle und die Führungen eingepreßt werden. Es muß dann keine spanabhebende Materialverarbeitung durchgeführt werden, was den Herstellungsprozeß vereinfacht. Außerdem lassen sich die entsprechenden Platten und damit auch der Platten-Wärmeübertrager kostengünstig herstellen.

Es wurde in der Literatur vorgeschlagen, Wärmeübertrager mittels Faserkeramikrohren zu bauen. Es zeigt sich jedoch, daß für die gleichen Wärmeübertragungsleistungen wie für einen Platten-Wärmeübertrager eine Vielzahl von Rohren (in der Größenordnung von 1000 oder mehr) mit kleinem Innendurchmesser und dünnen Wandstärken und einer großen Länge verwendet werden muß. Zum gegenwärtigen Zeitpunkt können solche Rohre nicht oder höchstens unter sehr hohem Aufwand hergestellt werden. Die Platten für einen Platten-Wärmeübertrager, in welchen Kanäle gebildet sind, lassen sich mittels eines Faserverbundwerkstoffes herstellen, wobei die Hochtemperaturbeständigkeit einschließlich der mechanischen Festigkeit und die Langzeitstabilität gewährleistet ist und auch auf einfache Weise ein Korrosionsschutz gegenüber Heißgaskorrosion herstellbar ist.

Alternativ oder zusätzlich kann es vorgesehen sein, daß eine oder mehrere Platten aus Siliciumcarbid (SiC) oder Siliciumnitrid (Si₃N₄) hergestellt sind.

Diese keramischen Materialien weisen auch als monolithische Werkstoffe Eigenschaften auf, die den Einsatz für Wärmeübertrager ermöglichen.

Die Herstellung von biomorphem kurzfaserverstärkten Siliciumcarbid ist in der nicht vorveröffentlichten deutschen Patentanmeldung Nr. 10 2004 043 985 vom 8. September 2004 beschrieben, auf die ausdrücklich Bezug genommen wird.

Als Wärmeübertrager lassen sich beispielsweise Regeneratoren oder Rekuperatoren bereitstellen. Beispielsweise können auch Porenbrenner-Wärmeübertrager-Kombinationen bereitgestellt sein, wobei insbesondere eine Porenstruktur des Porenbrenners integral an dem Wärmeübertrager gebildet ist.

Es ist auch möglich, den erfindungsgemäßen Wärmeübertrager im Zusammenhang mit chemisch aggressiven Fluiden wie Säuren und Salzen einzusetzen.

Insbesondere ist es vorgesehen, daß die Länge der Kurzfasern kleiner ist als die kleinste geometrische Länge von Strukturen einer Platte und insbesondere von Strukturen, welche die Kanäle bilden. Die Kanäle weisen beispielsweise Abmessungen von kleiner 5 mm auf. Es lassen sich dann die entsprechenden feinen Strukturen an einer Platte ausbilden, so daß sich wiederum eine Vielzahl von Kanälen in eine Platte integrieren läßt. Dadurch wiederum ergeben sich gute Wärmeübertragungseigenschaften.

Insbesondere ist es vorgesehen, daß die Länge der Kurzfasern kleiner ist als ein Drittel der kleinsten geometrischen Länge von Strukturen einer Platte, so daß eben gesichert ist, daß sich die Strukturen an einer Platte mittels des entsprechenden kurzfaserverstärkten Faserverbundwerkstoffes ausbilden lassen.

Insbesondere ist die Länge der Kurzfasern kleiner als 1 mm, wenn typische Dimensionierungen für einen Platten-Wärmeübertrager als eine Kraftwerkskomponente berücksichtigt werden.

Beispielsweise liegt die Länge der Kurzfasern zwischen 300 µm und 700 µm. Es sind beispielsweise Pechharz-Kurzfasern mit einer Länge von 380 µm ± 80 µm und einem Durchmesser von 13 µm erhältlich.

Insbesondere ist der Platten-Wärmeübertrager ein Hochtemperatur-Wärmeübertrager, welcher auch bei Temperaturen in der Größenordnung oberhalb von 800°C und insbesondere oberhalb von 1000°C bis 1500°C temperaturbeständig ist.

Ganz besonders vorteilhaft ist es, wenn der Platten-Wärmeübertrager rauchgasbeständig ist und/oder eine Beständigkeit gegen chemisch aggressive Fluide aufweist. Es kann dann beispielsweise eine Wärmeübertragung zwischen einem heißen Rauchgas und einem Prozeßgas wie Luft zur Zuführung zu einer Gasturbine erfolgen. Es ist dann auch ein Einsatz im Zusammenhang mit chemisch aggressiven Flüssigkeiten oder Gasen möglich wie beispielsweise Säuren und Salzen. Dies erlaubt beispielsweise den Einsatz in chemischen Anwendungen.

Günstigerweise ist der Faserverbundwerkstoff ein Keramikmaterial, um so eine Hochtemperaturbeständigkeit zu sichern.

Ganz besonders vorteilhaft ist es, wenn die Platten aus einem C/C-SiC-Faserkeramikmaterial hergestellt sind. Über die Fasern wird für eine gute Schadenstoleranz gesorgt aufgrund von Rißablenkung an der Faseroberfläche. SiC weist günstige thermomechanische Eigenschaften bei hoher Festigkeit auf, so daß auftretende mechanische Spannungen kontrollierbar sind. Durch ein solches Material lassen sich die Anforderungen an die Hochtemperaturbeständigkeit und bei entsprechender Behandlung an die Rauchgasbeständigkeit erfüllen.

Ganz besonders vorteilhaft ist es, wenn mindestens mit korrosiven Fluiden in Kontakt kommende Bereiche der Platten mit einer fluiddichten und insbesondere gasdichten Korrosionsschutzschicht versehen sind. SiC ist grundsätzlich für den Einsatz unter Rauchgasbedingungen nachteilig, da es anfällig ist gegenüber Heißgaskorrosion. Durch eine Korrosionsschutzschicht erhält man eben einen Korrosionsschutz, da SiC selber höchstens einen Oxidationsschutz für die Fasern bereitstellt. Dadurch läßt sich ein C/C-SiC-Faserkeramikmaterial auch für einen Platten-Wärmeübertrager unter Rauchgasbedingungen bei hohen Temperaturen bzw. im Zusammenhang mit chemisch aggressiven Fluiden einsetzen.

Ganz besonders vorteilhaft ist es, wenn die Korrosionsschutzschicht eine Cordieritschicht oder Yttriumsilikatschicht ist. Cordierit, welches auch als Dichroit bezeichnet wird, wirkt zusätzlich als Oxidationsschutzschicht und verbessert damit den Oxidationsschutz. Es hat sich auch gezeigt, daß Cordierit eine sehr gute Stabilität gegenüber korrosiven Atmosphären aufweist, wie eben auch Rauchgasatmosphären. Bezüglich Cordierit als Korrosionsschutz wird auf die deutschen Anmeldung Nr. 103 29 620.4 vom 26. Juni 2003 des gleichen Anmelders verwiesen.

Ganz besonders vorteilhaft ist es, wenn benachbarte Platten stoffschlüssig miteinander verbunden sind. Die Verbindung kann beispielsweise über Schlicker, d. h. über ein Pulver mit Suspension und Bindemitteln mit Nachbrennen erfolgen oder über Aufschmelzen. Dadurch müssen keine externen Verbindungsmittel und auch externe Dichtungen aus "artfremden" Materialien vorgesehen werden.

Insbesondere ist es vorgesehen, daß benachbarte Platten miteinander verklebt oder miteinander versintert sind. Bei der Verklebung ist ein Verbindungsmaterial zur Verbindung benachbarter Platten vorzugsweise ein Keramikmaterial. Dieses Keramikmaterial wird so gewählt, daß es einen vergleichbaren thermischen Ausdehnungskoeffizienten wie die Platte im Bereich der Verbindung aufweist. Dadurch lassen sich thermische Spannungen minimieren.

Ganz besonders vorteilhaft ist es, wenn eine einzelne Platte mindestens 15 Kanäle umfaßt. Es hat sich gezeigt, daß eine typische Größenordnung für Kanäle innerhalb einer Platte im Bereich zwischen 50 bis 100 liegt für Platten mit einer Größenabmessung im Bereich von Metern. Eine solche Anzahl von Kanälen läßt sich in einer Platte beispielsweise durch Pressung ausbilden. Die Kanäle weisen eine filigrane Struktur auf, die einen hohen Durchsatz von Fluiden wie Flüssigkeiten und Gasen durch einen Platten-Wärmeübertrager mit solchen Platten erlaubt. Dadurch wiederum läßt sich ein effektiver Wärmeübertrag durchführen.

Insbesondere sind getrennte Kanalsysteme für die Fluide vorgesehen, zwischen welchen ein Wärmeübertrag stattfinden soll, so daß diese Fluide nicht in Kontakt kommen können.

Ganz besonders vorteilhaft ist es, wenn Fluide für den Wärmeübertrag in getrennten Kanalsystemen in Gegenströmung geführt sind, so daß ein optimierter Wärmeübertrag möglich ist.

Bei einer Ausführungsform umfaßt eine Platte eines ersten Plattentyps ein Kanalsystem für ein erstes Fluid und eine benachbarte Platte eines zweiten Plattentyps ein Kanalsystem für ein zweites Fluid. In den unterschiedlichen Platten strömen dann unterschiedliche Fluide, wobei ein Wärmeübergang stattfindet. Die Plattentypen unterscheiden sich in der Art des geführten Fluids. Sie können auch unterschiedlich strukturiert sein. Beispielsweise können Kanäle für Rauchgas einen größeren Querschnitt als Kanäle für Prozeßgas wie Luft haben.

Es ist dann vorgesehen, daß Platten vom ersten Plattentyp und Platten vom zweiten Plattentyp alternierend aufeinanderfolgen. Entsprechend sind die Platten zu einem Plattenstapel gestapelt, der dann einen Kern eines Platten-Wärmeübertragers bildet.

Es kann vorgesehen sein, daß in den Kanälen Flossen angeordnet sind und insbesondere versetzt angeordnet sind und/oder die Kanäle mittels Flossen gebildet sind. Die Flossen vergrößern die Wärmeübertragerfläche. Durch sie wird eine Strömung zu Richtungswechseln gezwungen, so daß sich die Strömung ständig in einem Anströmungsbereich befindet. Dadurch wiederum wird die Strömungs-Grenzschicht dünn gehalten; dies führt zu einem hohen Wärmeübergangskoeffizienten.

Eine bekannte Kanalstruktur mit Flossen ist die Offset-Strip-Fin-Struktur (OSF-Struktur). Bei dieser Struktur sind benachbarte Flossen versetzt zueinander, so daß eben eine vergrößerte Kanalwandfläche bereitgestellt wird und damit auch die Strömung ständig im Anströmungsbereich vorliegt.

Es kann auch vorgesehen sein, daß in einer einzelnen Platte Kanäle für ein erstes Fluid und getrennte Kanäle für ein zweites Fluid gebildet sind, d. h. daß getrennte Kanalstrukturen an einer einzelnen Platte verwirklicht sind.

Insbesondere sind dann Kanäle für das erste Fluid und Kanäle für das zweite Fluid benachbart.

Es ist für eine gute Wärmeübertragung günstig, wenn dann ein Kanal in einer inneren Platte für das erste Fluid von vier Kanälen für das zweite Fluid umgeben ist. Das gleiche gilt dann auch für einen Kanal für das zweite Fluid, welcher in einer inneren Platte von vier Kanälen für das erste Fluid umgeben ist, und zwar seitlich hin in der Platte und zu den benachbarten Platten hin.

Ganz besonders günstig ist es, wenn eine einzelne Platte oder mehrere Platten gemeinsam einen Zuführungsanschluß und Abführungsanschluß für das erste Fluid aufweisen, welche mit den Kanälen für das erste Fluid verbunden sind. Es kann dann über einen einzigen externen Zuführungsanschluß bzw. Abführungsanschluß für eine Zuführung bzw. Abführung gesorgt werden.

Aus dem gleichen Grund ist es vorteilhaft, wenn eine einzelne Platte oder mehrere Platten gemeinsam einen Zuführungsanschluß und Abführungsanschluß für das zweite Fluid aufweisen, welche mit den Kanälen für das zweite Fluid verbunden sind.

Ganz besonders vorteilhaft ist es, wenn die jeweiligen Zuführungsanschlüsse in den Platten fluchtend ausgerichtet sind. Solche Zuführungsanschlüsse lassen sich in den Platten bei der Formung der Platten herstellen. Es braucht dann nur noch ein externer Anschluß vorgesehen werden, um das entsprechende erste Fluid bzw. zweite Fluid einzukoppeln, wobei über die Zuführungsanschlüsse für eine Verteilung auf die Kanäle in den jeweiligen Platten gesorgt wird.

Aus dem gleichen Grund ist es vorteilhaft, wenn die jeweiligen Abführungsanschlüsse in den Platten fluchtend ausgerichtet sind. Dadurch läßt sich für eine strömungswirksame Verbindung der Kanäle in den einzelnen Platten mit einer Abführung sorgen.

Günstigerweise sind die Platten gestapelt miteinander verbunden, um so einen Plattenstapel zu bilden, wobei dieser Plattenstapel dann wiederum den Kern eines Platten-Wärmeübertragers bildet.

Beispielsweise sind die Platten im wesentlichen quaderförmig. Dadurch lassen sich diese auf einfache Weise stapeln und es kann eine hohe Flächen-Kanaldichte in einer Platte erzeugt werden.

Der Erfindung liegt ferner die Aufgabe zugrunde, ein Verfahren zur Herstellung eines Platten-Wärmeübertragers bereitzustellen, mittels welchem sich ein solcher Platten-Wärmeübertrager auf einfache Weise mit guten Eigenschaften herstellen läßt.

Diese Aufgabe wird erfindungsgemäß dadurch gelöst, daß Platten getrennt mittels eines mit Kurzfasern verstärkten Faserverbundwerkstoffes hergestellt werden.

In den einzelnen Platten lassen sich während der Herstellung Strukturen und insbesondere kanalbildende Strukturen einprägen. Die fertiggestellten Platten weisen aufgrund der Kurzfaserverstärkung vorteilhafte Eigenschaften auf.

Die Vorteile des Verfahrens und weitere vorteilhafte Ausgestaltungen wurden bereits im Zusammenhang mit dem erfindungsgemäßen Platten-Wärmeübertrager erläutert.

Es ist möglich, eine durch Pyrolyse hergestellte "Rohplatte" zu bearbeiten, um kanalbildende Strukturen zu erzeugen. Der durch Pyrolyse erzeugte Kohlenstoffkörper wird beispielsweise mechanisch bearbeitet oder es werden kanalbildende Strukturen mittels Laserbearbeitung hergestellt.

Insbesondere werden in einen Platten-Ausgangskörper kanalbildende Strukturen eingepreßt. Der Platten-Ausgangskörper ist dabei aus einer Faser-Harz-Mischung hergestellt. Die Mischung umfaßt beispielsweise Kohlenstoffasern und/oder SiC-Fasern, ein Polymerharz, welches sich bei Pyrolyse in Kohlenstoff umwandelt, und gegebenenfalls weitere kohlenstoffhaltige Additive (wie Zellulose) und/oder SiC-haltige Additive. In einem Zustand vor Aushärtung des Harzes lassen sich die entsprechenden Strukturen wie eben kanalbildende Strukturen und Führungsstrukturen für die Stapelung der Platten herstellen.

Es wird dann durch Aushärtung des Harzes aus dem Platten-Ausgangskörper ein Platten-Grünkörper hergestellt, in dem dann die Kanäle und die Führungen gebildet sind. Insbesondere erfolgt die Aushärtung in einem Gesenk, mittels welchem die Kanäle und Führungen gebildet werden.

Ausgehend von dem Platten-Grünkörper wird ein Platten-Vorkörper pyrolysiert. Dieser Platten-Vorkörper weist eine offene Porosität auf, die durch Schrumpfung während der Pyrolyse verursacht ist.

Der Platten-Vorkörper ist ein C/C-Körper mit einer Faserstruktur, wenn die Kurzfasern Kohlenstoffasern sind und während der Pyrolyse für die Matrix eine Umwandlung in Kohlenstoff erfolgt ist.

Günstig ist es, wenn der Platten-Vorkörper siliciert wird. Dazu lassen sich bekannte Verfahren wie das LSI-Verfahren einsetzen, bei dem Risse mit flüssigem Silicium infiltriert werden und eine Reaktion des Siliciums mit Kohlenstoff erfolgt. Bei entsprechender Erhitzung entsteht dabei SiC, d. h. ein carbidkeramisches Material. SiC weist günstige thermomechanische und thermische Eigenschaften bei hoher Festigkeit auf und stellt darüber hinaus eine Oxidationsschutzschicht für die Kohlenstoffasern bereit.

Es kann dabei vorgesehen sein, daß oberflächlich haftendes Silicium entfernt wird, welches sonst Kanäle und/oder Führungen blockieren könnte.

Die hergestellte Platte ist ein C/C-SiC-Körper, wenn ein C/C-Körper siliciert wird.

Insbesondere liegen Silicium und Siliciumcarbid in Relation zu den Kohlenstoffanteilen im Überschuß vor, so daß eine keramische Platte hergestellt ist mit geringer Sprödigkeit aufgrund der Faseranteils, mit filigranen Strukturen aufgrund der Kurzfasern und mit guten thermomechanischen Eigenschaften bei hoher Festigkeit aufgrund des Siliciumcarbids.

Es ist dann besonders vorteilhaft, wenn eine hergestellte Platte mindestens teilweise mit einer Korrosionsschutzschicht versehen wird. Dadurch wird vor allem das SiC geschützt, welches sehr anfällig ist gegenüber Heißgaskorrosion. Es läßt sich dann mit solchen Platten ein rauchgasbeständiger Platten-Wärmeübertrager herstellen.

Ein geeigneter Korrosionsschutz ist Cordierit und/oder Yttriumsilikat (3Y₂O₃ * SiO₂), wobei eine hergestellte Platte zumindest teilweise mit einer Cordieritschicht oder Yttriumsilikatschicht versehen wird.

Die Korrosionsschutzschicht läßt sich beispielsweise mittels Plasmaspritzen und insbesondere Vakuumplasmaspritzen (VPS) aufbringen.

Es werden dann die Platten miteinander zu einem Plattenstapel verbunden. Ganz besonders vorteilhaft ist es, wenn bei der Herstellung von Platten in diesen Führungen bzw. Verbindungsstrukturen integriert werden, über die Platten verbindbar und/oder stapelbar sind. Bei diesen Führungen bzw. Verbindungsstrukturen handelt es sich beispielsweise um Nuten oder dergleichen.

Ganz besonders vorteilhaft ist es, wenn Platten stoffschlüssig miteinander verbunden werden. Es müssen dann keine externen Dichtungen aus einem "artfremden" Material vorgesehen werden. Es lassen sich dann wiederum die thermischen Spannungen minimieren, wodurch auch bei hohen Temperaturen eine Dichtigkeit gewährleistbar ist.

Günstigerweise wird ein keramisches Verbindungsmittel zur Verbindung zweier Platten verwendet. Dadurch lassen sich Dichtigkeitsprobleme vermeiden, wie sie beispielsweise durch externe Dichtungen hervorgerufen werden. Wenn eine Platte mit Cordierit beschichtet ist, dann ist Cordierit ein geeignetes Verbindungsmittel.

Insbesondere wird ein keramischer Brand zur Ausbildung einer Verbindungsschicht durchgeführt, um so eine stabile dichte Verbindung zwischen benachbarten Platten zu erreichen.

Es ist auch möglich, Platten über Sintern zu verbinden. Auch auf diese Weise läßt sich eine stoffschlüssige Verbindung zwischen Platten erreichen.

Es kann vorgesehen sein, daß zwei Platten zu einer Doppelplatte verbunden werden und dann ein Plattenstapel aus solchen Doppelplatten zusammengesetzt wird. Dies erleichtert die Herstellung, da beispielsweise eine Doppelplatte siliciert werden kann und dadurch, da nur noch halb so viel Objekte siliciert werden müssen, eine entsprechende Zeitersparnis bei der Herstellung erreicht wird.

Insbesondere wird eine Verbindungsschicht zur Verbindung der Platten siliciert. Die Verbindungsschicht wird mittels einer Fügepaste gebildet, wobei entsprechende Platten-Grünkörper miteinander verbunden werden und dann die Silicierung der Platten einschließlich der Verbindungsschicht durchgeführt wird.

Günstig ist es dann, wenn mit einer Korrosionsschutzschicht zu versehende Oberflächen außenliegende Oberflächen der Doppelplatte sind. Es läßt sich dann auf einfache Weise eine mit einer Korrosionsschutzschicht versehene Kanalstruktur ausbilden, wobei beispielsweise zu einer Seite der Doppelplatte hin die Kanäle für Rauchgas angeordnet sind und zur anderen Seite ein "Deckel" für die Rauchgaskanäle einer benachbarten Platte. Die Doppelplatten lassen sich dann über eine stoffschlüssige Verbindung wie beispielsweise mittels eines keramischen Verbindungsmittels oder über Sinterung verbinden.

Der Erfindung liegt ferner die Aufgabe zugrunde, einen keramischen Faserverbundwerkstoff der eingangs genannten Art zu schaffen, welcher eine reduzierte Rißdichte aufweist.

Diese Aufgabe wird bei dem eingangs genannten keramischen Faserverbundwerkstoff erfindungsgemäß dadurch gelöst, daß die Faserstruktur mittels Kurzfasern gebildet ist.

Durch die Verwendung von Kurzfasern (Fasern mit einer Länge kleiner als 40 mm) lassen sich mit einem solchen Werkstoff auch filigrane Strukturen erreichen. Die Kurzfasern selber stellen die größte Materialeinheit dar. Das Spannungsprofil im Werkstoff ist homogenisiert. Dadurch läßt sich die Rißdichte insbesondere für eine nachträgliche Cordieritbeschichtung reduzieren. Aufgrund der Kurzfasern ist der Faseranteil verringert gegenüber dem Fall von Endlosfasern. Dadurch läßt sich bei der Silicierung der SiC-Anteil vergrößern. Dadurch wiederum entstehen weniger Risse und bezüglich einer Cordieritschicht erhält man eine bessere Anpassung der Wärmeausdehnungskoeffizienten. Dadurch wiederum entstehen in einer Cordieritschicht als Korrosionsschutzschicht weniger Risse.

Es wird dadurch ein hochtemperaturbeständiges Material bereitgestellt, welches auch oxidationsbeständig ist und beständig gegenüber Heißgaskorrosion.

Insbesondere weisen die Kurzfasern eine Länge von kleiner als 40 mm auf und vorzugsweise kleiner als 5 mm. Dadurch lassen sich auch kleine Strukturen und insbesondere Kanalstrukturen ausbilden.

Insbesondere ist eine Silicierung vorgesehen, so daß der Faserverbundwerkstoff eine Carbidkeramik ist.

Günstig ist es, wenn Silicium und Siliciumcarbid gegenüber den Kohlenstoffanteilen im Überschuß vorliegt, so daß günstige thermomechanische Eigenschaften vorliegen bei hoher Festigkeit. Wenn von einer Faserstruktur mittels Kurzfasern ausgegangen wird, dann lassen sich die Kohlenstoffanteile weiter reduzieren.

Ganz besonders vorteilhaft ist es, wenn eine Cordieritbeschichtung oder Yttriumsilikatbeschichtung vorgesehen ist, welche ein Bauteil aus dem Werkstoff nach außen bedeckt. Die Cordieritbeschichtung oder Yttriumsilikatbeschichtung stellt eine Korrosionsschutzschicht dar, die insbesondere das Siliciumcarbid gegenüber Heißgaskorrosion schützt.

Ein Bauteil wie beispielsweise eine Platte für einem Platten-Wärmeübertrager, welches aus einem solchen Faserverbundwerkstoff hergestellt ist, weist vorteilhafte Eigenschaften auf. Insbesondere ist dabei eine Oberflächenschicht eine Cordieritschicht oder Yttriumsilikatschicht.

Die nachfolgende Beschreibung bevorzugter Ausführungsformen dient im Zusammenhang mit der Zeichnung der näheren Erläuterung der Erfindung. Es zeigen:
- Figur 1: eine Schemadarstellung eines Kraftwerkteils mit Gasturbine und Befeuerungseinrichtung als Einsatzbeispiel für einen erfindungsgemäßen Platten-Wärmeübertrager;
- Figur 2: eine Teilansicht eines ersten Ausführungsbeispiels eines erfindungsgemäßen Platten-Wärmeübertragers;
- Figur 3: eine Teilschnittansicht eines zweiten Ausführungsbeispiels eines erfindungsgemäßen Platten-Wärmeübertragers;
- Figur 4: eine Ansicht von oben auf eine Platte des Wärmeübertragers gemäß Figur 3;
- Figur 5: eine entsprechende Ansicht auf eine weitere Platte und
- Figur 6: eine Ansicht auf eine Doppelplatte.

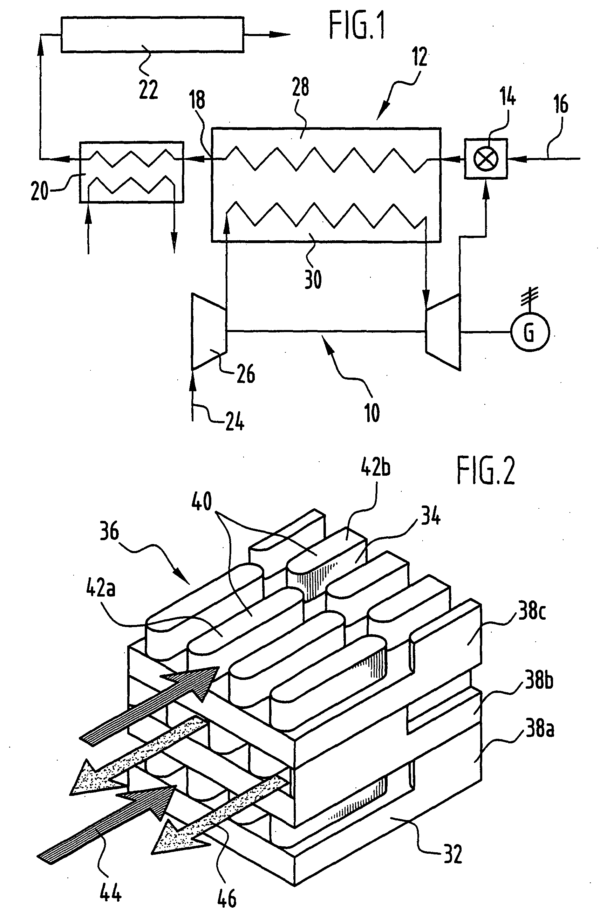

Bei dem sogenannten EFGT-Konzept (EFGT - Externally Fired Gas Turbine) ist eine Gasturbine 10 an einen Wärmeübertrager 12 gekoppelt (Figur 1). In einer Brennkammer 14, welche mit Brennstoffen wie Kohle oder Biomasse oder Reststoffen versorgt wird (angedeutet durch den Pfeil 16), entsteht als Verbrennungsprodukt heißes Rauchgas. Dieses durchströmt den Wärmeübertrager 12.

An einen Ausgang 18 des Wärmeübertragers 12 kann ein Wärmetauscher 20 gekoppelt sein, um die Restwärme des Rauchgases zu nutzen. Dem Wärmetauscher 20 folgt eine Einrichtung 22 zur Gasaufbereitung.

Die Gasturbine ist von angesaugter Luft (angedeutet durch den Pfeil 24) durchströmt, wobei die Luft in dem Wärmeübertrager 12 über Rauchgas aufgeheizt wird. Die Luft wurde zuvor in einer Verdichterstufe 26 verdichtet. Der Gasturbine 10 wird somit über den Wärmeübertrager 12 heiße verdichtete Luft zugeführt.

Bei der direkten Verstromung von Kohle oder bei der Verstromung von nicht konventionellen Brennstoffen wie Biomasse oder Reststoffe kann die Wärme über das Rauchgas nicht direkt durch die Gasturbine 10 genutzt werden, da in dem Rauchgas Partikel vorhanden sind und chemisch aggressive Stoffe vorhanden sind. Bei den entsprechenden herrschenden hohen Temperaturen würde das Rauchgas zu einer Beschädigung der Gasturbine führen. Es ist auch zu berücksichtigen, daß Endschaufeln einer Gasturbine in Betriebsmoden mit Überschallgeschwindigkeit rotieren können; bei diesen Geschwindigkeiten können Partikel zu einer Zerstörung der Endschaufeln führen.

Die Eintrittstemperatur der heißen Luft in die Gasturbine kann in der Größenordnung von 1000°C liegen; die notwendige Temperatur des Rauchgases sollte dann bei 1200°C oder höher liegen. Bei diesen Temperaturen sind metallische Werkstoffe nicht mehr verwendbar. Es wurde vorgeschlagen, keramische Werkstoffe für den Wärmeübertrager 12 einzusetzen, wobei die Werkstoffe hochtemperaturbeständig sein müssen und rauchgasbeständig.

Es ist grundsätzlich möglich, daß der Wärmeübertrager 12 mehrteilig ausgebildet ist und insbesondere einen "Niedertemperaturteil" 28 und einen Hochtemperaturteil 30 aufweist. Der Niedertemperaturteil 28 kann, wenn in diesem genügend niedrige Temperaturen herrschen, metallisch ausgebildet sein. Insbesondere ist er dem Hochtemperaturteil 30 vorgeschaltet bezüglich der Luftdurchführung und dem Hochtemperaturteil 30 nachgeschaltet bezüglich der Rauchgasdurchführung.

Im folgenden werden Ausführungsbeispiele für erfindungsgemäße Wärmeübertrager 12 beschrieben, welche Hochtemperatur-Wärmeübertrager sind bzw. Hochtemperaturteile 30 eines Wärmeübertragers.

Erfindungsgemäß wird ein Hochtemperatur-Wärmeübertrager als Platten-Wärmeübertrager bereitgestellt, der rauchgasbeständig ist. Der Wärmeübertrager umfaßt eine Mehrzahl von Platten, welche miteinander verbunden sind.

Die Platten sind insbesondere übereinandergestapelt. In den Platten sind Kanäle für die entsprechenden Fluide gebildet. Der Plattenstapel ist von einer beispielsweise aus Aluminiumoxidplatten gebildeten thermischen Isolierung umgeben, wobei die gesamte Anordnung in einem Gehäuse aufgenommen ist. Das Gehäuse ist beispielsweise aus Stahl gefertigt.

Die Platten selber sind aus einem mit Kurzfasern verstärkten Faserverbundwerkstoff hergestellt. Unter Kurzfasern werden üblicherweise Fasern verstanden, die kleiner als 40 mm und insbesondere kleiner als 5 mm sind. Erfindungsgemäß ist es vorgesehen, daß die Länge der Kurzfasern zur Herstellung der Platten kleiner ist als die kleinste geometrische Länge von Strukturen der Platten, welche die Kanäle in den Platten bilden. Insbesondere sind die Fasern kürzer als ein Drittel dieser geometrischen Abmessungen. Insbesondere ist die Länge der Fasern kleiner als 1 mm. Beispielsweise stehen Pechharz-Kurzfasern mit einer Faserlänge von 380 µm ± 80 µm zur Verfügung, welche einen Durchmesser von 13 µm haben.

Es ist grundsätzlich auch möglich, sehr kurze Fasern zu verwenden, bei denen die Länge in der Größenordnung des Zehnfachen des Durchmessers der Fasern mit Durchmessern im 10 µm-Bereich liegen. Solche Fasern werden als Whisker-Fasern bezeichnet.

Als Fasern werden dabei Gebilde bezeichnet, bei denen die Länge erheblich größer ist als der Durchmesser und insbesondere mindestens fünffach größer ist als der Durchmesser.

Die Kurzfasern bilden in dem Werkstoff eine Faserstruktur. Sie sind vorzugsweise aus Kohlenstoff hergestellt. Die Fasern wiederum sind in eine Matrixstruktur eingebettet, wobei die Matrixstruktur vorzugsweise eine Kohlenstoff-Matrixstruktur ist. Der Werkstoff ist siliciert, so daß ein C/C-SiC-Werkstoff gebildet ist, d. h. eine nicht-monolithische Carbidkeramik. Der entsprechende Körper kann an seiner Oberfläche mindestens zu den rauchgasführenden Bereichen hin mit einer Korrosionsschutzschicht versehen sein, bei der es sich insbesondere um eine Cordieritschicht handelt. Cordierit verbessert den Oxidationsschutz für die Fasern und stellt eben einen Korrosionsschutz bereit, welcher der Heißgaskorrosion entgegenwirkt. Cordierit, welches auch als Dichroit, hat als Summenformel Mg₂Al₃[AlSi₅ O₁₈] bzw. 2MgO · 2Al₂O₃ · 5SiO₂.

Bei der Verwendung dieses Werkstoffes gegebenenfalls mit der Cordieritbeschichtung ist die Hochtemperaturbeständigkeit auch unter aggressiven Fluiden und insbesondere Gasen gewährleistet. Das entsprechende Material ist weniger spröde als monolithische Keramiken; es lassen sich leichter kanalbildende Strukturen herstellen. Das Siliciumcarbid in dem Werkstoff weist günstige thermomechanische Eigenschaften bei hoher Festigkeit auf, so daß die auftretenden Spannungen kontrollierbar bleiben. Die Cordieritbeschichtung wiederum schützt das Siliciumcarbid gegenüber Korrosion.

Hochtemperaturbeständige Bauteile aus einem kohlenstoffhaltigen Grundkörper oder einem Grundkörper aus einem monolithischen Keramikmaterial, bei dem eine Cordieritschicht den Grundkörper zur Bauteiloberfläche hin abdeckt sowie Verfahren zur Herstellung eines hochtemperaturbeständigen Bauteils, bei dem auf einen kohlenstoffhaltigen Grundkörper (oder einen Grundkörper aus einem monolithischen Keramikmaterial) als äußere Schicht eine Cordieritschicht aufgebracht wird, sind aus der nicht vorveröffentlichten deutschen Anmeldung Nr. 103 29 620.4 vom 26. Juni 2003 des gleichen Anmelders bekannt. Auf dieses Dokument wird ausdrücklich Bezug genommen.

In den einzelnen Platten, die aus dem erfindungsgemäßen Werkstoff hergestellt sind, sind Kanäle gebildet, wobei pro Platte 30 oder mehr Kanäle gebildet sind. Eine typische Zahl von Kanälen liegt zwischen 50 und 100 bei einer Platte einer Dicke in der Größenordnung 3 mm und einer Breite und Höhe von ca. 1,70 m. Die Kanäle sind in die einstückig ausgebildete Platte integriert.

Ein erstes Ausführungsbeispiel eines erfindungsgemäßen Wärmeübertragers, welcher in Figur 2 ausschnittsweise gezeigt ist anhand von Plattenausschnitten, umfaßt übereinandergestapelte Platten 32. In einer jeweiligen Platte sind Kanäle 34 gebildet, wobei die Kanäle 34 zu einer einer benachbarten Platte hin gewandten Seite offen sind. Die entsprechenden Kanäle 34 lassen sich dadurch bei der Herstellung der Platte 32 oberflächlich einbringen.

Die Platten 32 sind zu einem Plattenstapel 36 gestapelt, indem benachbarte Platten 38a, 38b und 38b, 38c usw. miteinander verbunden sind. Die Verbindung ist dabei stoffschlüssig und erfolgt beispielsweise über ein keramisches Verbindungsmaterial, wie unten noch näher beschrieben wird.

Bei dem Ausführungsbeispiel gemäß Figur 2 sind die Kanäle mittels Flossen 40 gebildet, die für eine Strömungsumlenkung sorgen. Die Flossen 40 weisen eine relativ kurze Erstreckung auf, d. h. sie erstrecken sich nicht über die ganze Plattenbreite. Durch die Flossen 40 wird die Wärmeübertragerfläche an den Kanälen 34 erhöht. Die Strömung durch die Kanäle 34 wird durch die Flossen 40 ständig zu Richtungswechseln gezwungen. Die Flossen 40 liegen damit bezüglich der Strömung stets in einem Anströmbereich, was wiederum dazu führt, daß die Strömungs-Grenzschicht dünn gehalten wird, was zu einem hohen Wärmeübergangskoeffizienten führt.

Ein Wärmeübertrager eines solchen Designs wird als OSF-Wärmeübertrager bezeichnet (OSF - Offset Strip Fin). Es wird in diesem Zusammenhang auf die Monografie "Compact heat exchangers" von John E. Hesselgreaves, Pergamon, 2001 und dort insbesondere auf die Seiten 178 ff. verwiesen.

Benachbarte Flossen 42a, 42b sind nicht fluchtend ausgerichtet, sondern versetzt zueinander, um so eben einen Anströmungsbereich zu schaffen ("offset").

Es ist vorgesehen, daß pro Platte ein Fluid die Platte durchströmt, d. h. ein erstes Fluid durchströmt die Platte 38a und ein zweites Fluid durchströmt die Platte 38b. Beispielsweise durchströmt Rauchgas (angedeutet durch den Pfeil 44) die Platte 38a und Prozeßgas (angedeutet durch den Pfeil 46) durchströmt die benachbarte Platte 38b, und zwar in Gegenströmung zu der Strömung durch die benachbarte Platte 38a. Bei dem Prozeßgas handelt es sich insbesondere um Luft. Die entsprechenden, dem ersten Fluid und dem zweiten Fluid zugeordneten Platten sind dann in alternierender Reihenfolge aufeinandergestapelt und bilden so den Plattenstapel 36, welcher wiederum mit den entsprechenden Anschlüssen, der Isolierung und dem Gehäuse einen erfindungsgemäßen Wärmeübertrager bildet.

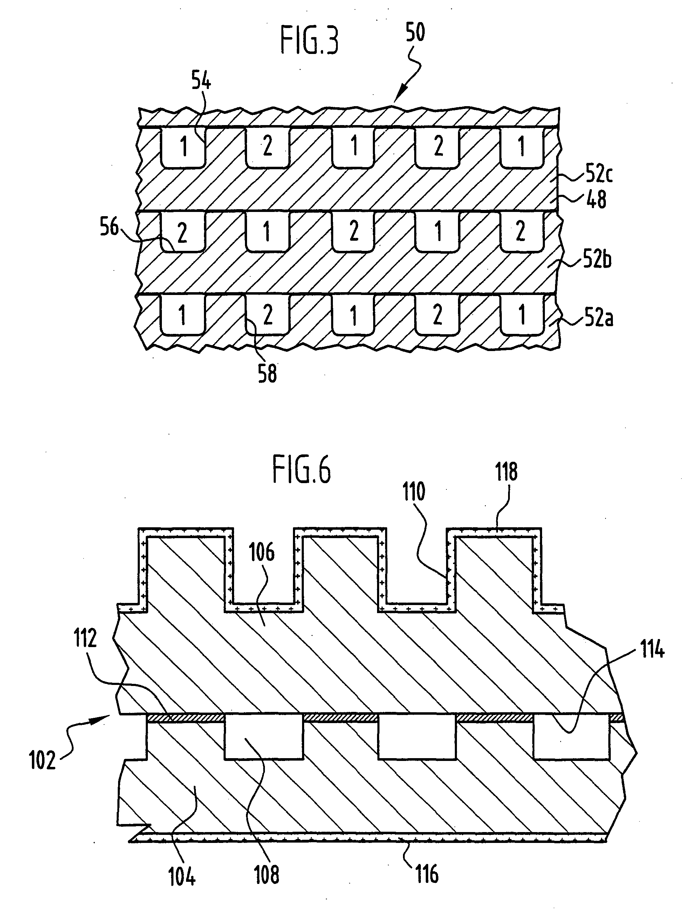

Bei einem zweiten Ausführungsbeispiel, welches in den Figuren 3 bis 5 schematisch dargestellt ist, ist wiederum eine Mehrzahl von Platten 48 vorgesehen, welche zu einem Plattenstapel 50 verbunden sind. Es sind dabei benachbarte Platten 52a, 52b und 52b, 52c usw. miteinander verbunden, wie unten noch näher beschrieben wird. In jeder Platte 48 sind Kanäle 54 gebildet, wobei in einem mittels dieses Plattenstapels 50 gebildeten Wärmeübertrager jede Platte 48 sowohl von dem ersten Fluid (beispielsweise Rauchgas) als auch dem zweiten Fluid (beispielsweise Prozeßgas) durchströmt wird.

Die Kanäle 54 sind beispielsweise durchgehend ausgebildet und insbesondere geradlinig ausgebildet. Benachbarte Kanäle innerhalb einer Platte 48 tragen im Betrieb des entsprechenden Wärmeübertragers unterschiedliche Fluide, d. h. innerhalb einer Platte gibt es zwei getrennte Kanalsysteme, nämlich ein Kanalsystem für das erste Fluid und ein Kanalsystem für das zweite Fluid. Dies ist in Figur 3 durch die Ziffern 1 und 2 angedeutet. Innerhalb einer Platte 48 folgen dabei die Kanäle 54 der getrennten Kanalsysteme alternierend aufeinander, d. h. neben einem Kanal für das erste Fluid liegt ein Kanal für das zweite Fluid. Die getrennten Kanalsysteme werden insbesondere in Gegenrichtung von den entsprechenden Fluiden durchströmt.

Bezüglich benachbarter Platten sind die Kanäle 54 so angeordnet, daß ein Kanal 56 für einen bestimmten Fluidtyp wie das erste Fluid von vier Kanälen 58 für einen anderen Fluidtyp wie das zweite Fluid umgeben ist. Innerhalb des Plattenstapels 50 ist also ein Kanal 56 für einen bestimmten Fluidtyp nach links und rechts und nach oben und unten von Kanälen für einen anderen Fluidtyp umgeben.

Die Platten 48 sind so ausgebildet, daß eine Stoff- und gegebenenfalls formschlüssige Verbindung der Platten 48 in dem Plattenstapel 50 über Verklebung oder Versinterung der Platten erreichbar ist, wobei vorzugsweise über die Verklebung/Versinterung auch gleich eine Abdichtung erreicht wird. Bei einer Platte 60 für den Plattenstapel 50 ist durch eine Öffnung in der Platte für die Platte 60 selber ein Zuführungsanschluß 62 für das erste Fluid, ein Zuführungsanschluß 64 für das zweite Fluid, ein Abführungsanschluß 66 für das erste Fluid und ein Abführungsanschluß 68 für das zweite Fluid gebildet. Diese Anschlüsse liegen bei einer rechteckigen Platte im Bereich der Ecken der Platte 60. Es kann vorgesehen sein, daß der Zuführungsanschluß und der Abführungsanschluß für das gleiche Fluid (Anschlüsse 62, 66 und Anschlüsse 64, 68) diagonal gegenüberliegen.

Der Zuführungsanschluß 62 für das erste Fluid ist eingangsseitig mit Kanälen 70 für das erste Fluid verbunden und entsprechend ist der Abführungsanschluß 66 ausgangsseitig mit diesen Kanälen 70 verbunden. Auf die gleiche Weise ist der Zuführungsanschluß 64 eingangsseitig mit Kanälen 72 für das zweite Fluid verbunden und ausgangsseitig ist der Abführungsanschluß 66 mit diesen Kanälen 72 verbunden. Über die Anschlüsse 62, 64, 66, 68 läßt sich somit das jeweilige Fluid in die Platte 60 einkoppeln und auch wieder auskoppeln.

Innerhalb der Platte sind die Kanäle 70, 72 im wesentlichen geradlinig ausgebildet. Sie liegen parallel versetzt nebeneinander.

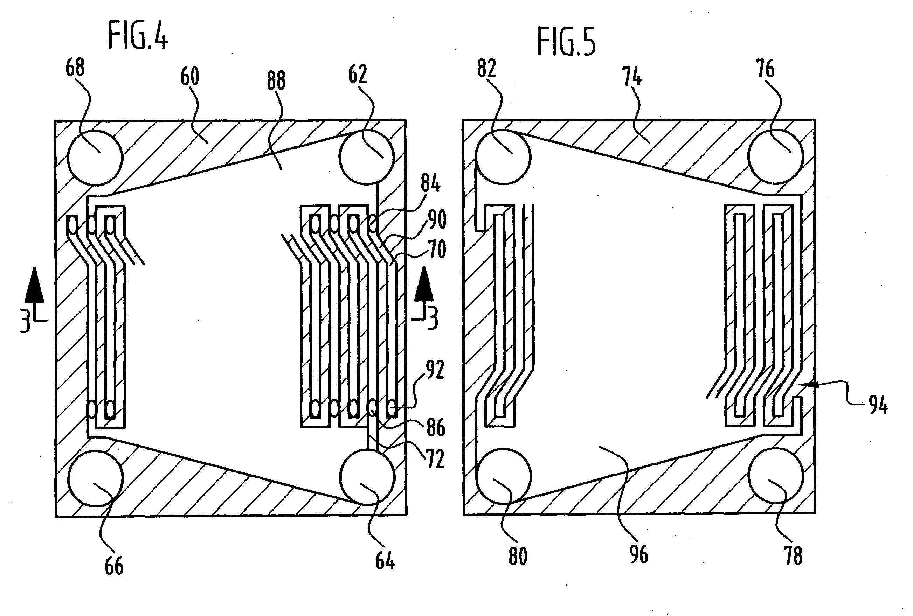

Es kann vorgesehen sein, daß zwei benachbarte Platten, wenn diese miteinander verbunden sind, eine Platteneinheit bilden, wobei die Kanäle zwischen den beiden Platten so verbunden sind, daß diese über gemeinsame Anschlüsse mit den Fluiden versorgbar sind und über gemeinsame Anschlüsse Fluide abgeführt werden können. Eine entsprechende Platte, welche der Platte 60 zugeordnet ist, ist in Figur 5 mit 74 bezeichnet. Diese weist Anschlüsse 76, 78, 82 auf, welche mit den entsprechenden Anschlüssen der Platte 60 korrespondieren (d. h. 76 mit 62, 78 mit 64, 80 mit 66 und 82 mit 68). Bei aufeinandergestapelten Platten sind diese Anschlüsse fluchtend ausgerichtet.

Die Kanäle 70 und 72 in der ersten Platte 60 sind mit jeweiligen Öffnungen 84, 86 versehen, über die Fluid zu der zweiten Platte 74, wenn diese unterhalb der Platte 60 angeordnet ist, strömen kann. Wenn das erste Fluid über den Zuführungsanschluß 62 in die erste Platte 60 strömt, dann wird dieses Fluid über einen Zuführungsraum 88 in jeden zweiten Kanal gedrückt (vgl. dazu Figur 3, welche eine schematische Schnittansicht längs der Linie 3-3 der Figur 4 ist). Die Öffnungen 84 befinden sich in der Nähe eines Eingangs der Kanäle 70. Die Kanäle 70 sind nach der Öffnung in einem Bereich 90 um eine Kanalbreite versetzt, so daß das erste Fluid oberhalb eines Kanals für das zweite Fluid (welcher in der Platte 74 angeordnet ist) strömen kann. Es ist ferner eine Öffnung 92 am Ende der Kanäle 70 angeordnet, über die dann das erste Fluid ebenfalls in die zweite Platte 74 strömen kann. In dem Bereich der Öffnung 92 liegt in der zweiten Platte 74 (der unteren Platte) ein Bereich 94 vor, in welchem die entsprechenden Kanäle zueinander versetzt sind. Dadurch kann die Öffnung 92 zwei Kanäle für das erste Fluid in der Platte 74 miteinander verbinden. Über einen Sammelraum 96 läßt sich dann das erste Fluid abführen.

Die Führung des zweiten Fluides in den Platten 60, 74 erfolgt auf im wesentlichen gleiche Weise.

Für einen oben beschriebenen EFGT-Prozeß mit einer elektrischen Leistung von 6 MW, einer zu übertragenden Wärmeleistung des Hochtemperatur-Wärmeübertragers 30 (keramischer Wärmeübertrager) von 9,1 MW, einer Eintrittstemperatur des Prozeßgases Luft von 722 °C, einer Austrittstemperatur des Prozeßgases von 1015°C, einer Eintrittstemperatur des Rauchgases von 1250°C und einer Austrittstemperatur des Rauchgases von 900°C bei einem Massenstrom des Prozeßgases von 24,4 kg/s und einem Massenstrom des Rauchgases von 21,7 kg/s wurden die entsprechenden Daten für einen erfindungsgemäßen Platten-Wärmeübertrager aus einem kurzfaserverstärkten Werkstoff im OSF-Design ermittelt. Es wurde dabei von einer Flossenlänge von 15 mm, einer Höhe der Kanäle für Rauchgas von 7,5 mm und der Höhe der Kanäle für Prozeßgas von 2,5 mm ausgegangen.

Bei einer Plattendicke von 1,5 mm, einer Breite von 1,45 m, einer Tiefe von 1,45 m und einer Länge von 0,68 m des Kerns der aufeinandergestapelten Platten mit 112 Doppelplatten ergab sich ein Gewicht des Kerns von 1,07 t.

Ein Rohrbündel-Wärmeübertrager, wie er aus dem Stand der Technik bekannt ist, müßte bei den gleichen Wärmeübertragungsdaten 1700 Rohre mit einer Rohrlänge von 4,51 m, einem Rohraußendurchmesser von 13 mm und einer Wandstärke von 1,5 mm aufweisen. Rohre mit diesen Abmessungen lassen sich - wenn überhaupt - mit Faserverbundwerkstoffen nur unter größten Schwierigkeiten herstellen.

Erfindungsgemäß werden die Platten 32, 48 wie folgt hergestellt:

Es erfolgt eine Herstellung von Einzelplatten. Es werden dabei zunächst Platten-Ausgangskörper hergestellt, in denen kanalbildende Strukturen und Verbindungsstrukturen zur Verbindung benachbarter Platten gebildet werden. Es wird dann ein Platten-Grünkörper durch Harzaushärtung hergestellt. Aus diesem Platten-Grünkörper wird ein Platten-Vorkörper durch Pyrolyse hergestellt. Dieser Platten-Vorkörper wiederum wird siliciert, um einen keramischen Platten-Körper auf Basis von Carbidkeramik zu erhalten. Dieser Platten-Körper wird mit einer Oberflächenbeschichtung und insbesondere einer Cordieritbeschichtung versehen. Es werden dann die einzelnen Platten gefügt und es wird eine stoffschlüssige Verbindung erzeugt. Die einzelnen Schritte sind wie folgt:

Mittels Kohlenstoff-Kurzfasern und/oder SiC-Fasern (wobei die Faserlänge an die kleinsten geometrischen Strukturen, welche erzeugt werden sollen, angepaßt sind), Harz wie Phenolharz als Kohlenstoff-Precursor und kohlenstoffhaltigen Füllstoffen wie Zellulosepulver und Kohlenstoffpulver (und/oder gegebenenfalls SiC-Additiven) wird ein Faser-Harz-Gemisch hergestellt und in ein plattenförmiges Gesenk eingebracht. Dort findet eine Verpressung zur Ausbildung der Kanäle und eventuellen Verbindungsstrukturen wie Führungen wie Nuten oder Zapfen statt. Bei der Verwendung eines entsprechenden Gemisches (Kohlenstoff-Kurzfasern, Harz und Additive mit definierten Volumenanteilen) läßt sich ein nahezu isotroper Gefügeaufbau erreichen. Das Gesenk ist so ausgebildet, daß eben die Kanäle auch mit Abmessungen kleiner als 10 mm in die Oberfläche eingepreßt werden.

Entsprechend sind in dem Gesenk Konturen zur Ausbildung beispielsweise von Nuten oder Zapfen vorgesehen.

Anschließend wird aus diesem Platten-Ausgangskörper ein Platten-Grünkörper durch Aushärtung des Harzes hergestellt, wobei die Aushärtung vorzugsweise in dem Gesenk erfolgt.

Dieser Platten-Grünkörper wird pyrolysiert, wobei eine Umwandlung insbesondere des Harzes in Kohlenstoff erfolgt. Die Pyrolyse erfolgt unter Inertgas wie Stickstoff bei Temperaturen bis ca. 1650°C. Das Endprodukt der Pyrolyse ist ein Platten-Vorkörper mit einer Kohlenstoff-Faserstruktur und einer Kohlenstoffmatrix, d. h. ein C/C-Körper. Durch die thermische Behandlung während der Pyrolyse tritt ein Massenverlust der Matrix ein sowie eine Längsschrumpfung. Die Matrixschrumpfungen werden durch die eingelagerten Fasern behindert, wodurch offene Poren entstehen. Der durch die Pyrolyse hergestellte C/C-Körper ist also porös. Dieser Körper kann bearbeitet werden, beispielsweise durch Einbringung zusätzlicher Bohrungen und durch Herstellung einer Paßgenauigkeit für die entsprechende Platte. Es können beispielsweise auch Kanäle oder Rippen hergestellt werden.

Anschließend wird eine Silicierung durchgeführt, beispielsweise nach dem bekannten LSI-Verfahren. Bei der Silicierung wird dem C/C-Körper schmelzflüssiges Silicium zugeführt. Es erfolgt dabei eine Umsetzung des Kohlenstoffs fast vollständig zu SiC. Restporen werden mit Siliciumschmelze gefüllt. Die Auffüllung der Poren erfolgt dabei über Kapillarkräfte. Insbesondere im Zusammenhang mit weiterer Erhitzung entsteht dadurch ein carbidkeramisches Material mit Kohlenstoff-Kurzfasern.

Bei der Silicierung ist darauf zu achten, daß die feinen Kanalstrukturen (mit typischen Abmessungen kleiner 5 mm) nicht mit Silicium gefüllt werden bzw. es muß eine nachträgliche Bearbeitung zur Räumung der Kanäle durchgeführt werden. Beispielsweise läßt sich oberflächlich anhaftendes Silicium durch mechanisches Bearbeiten oder thermisches Entsilicieren entfernen.

Das Ergebnis der Silicierung ist eine C/C-SiC-Platte mit Kohlenstoff-Kurzfasern und Kohlenstoff-Matrixanteilen als Verstärkungskomponenten in Unterschuß. Dieser entsprechende Körper weist eine geschlossene Porosität auf, wobei eine Fluiddichtigkeit und insbesondere Gasdichtigkeit erreicht ist. Dadurch sind die Kohlenstoffasern geschützt, wobei über die SiC-Struktur ein Oxidationsschutz bereitgestellt ist.

Es ist ferner vorgesehen, daß zumindest für die rauchgasführenden Bereiche ein Korrosionsschutz bereitgestellt ist. Dazu wird eine Beschichtung mit einem Korrosionsschutzmaterial wie beispielsweise Cordierit durchgeführt. Diese Oberflächenbeschichtung ist ebenfalls fluiddicht. Sie erfolgt insbesondere mittels Vakuumplasmaspritzen. Im Zusammenhang mit der Beschichtung mit Cordierit wird auf die deutsche Anmeldung Nr. 103 29 620.4 vom 26. Juni 2003 des gleichen Anmelders verwiesen.

Die so hergestellten Platten werden dann zu einem Plattenstapel gefügt, wobei eine stoffschlüssige Fügung und auch formschlüssige Fügung zwischen den Platten erfolgt. Die hergestellten Führungen wie Nuten und dergleichen sorgen dafür, daß die Stapelung paßgenau erfolgen kann. Die Oberflächen der Platten, über welche benachbarte Platten miteinander verbunden werden sollen, werden mit einer keramischen Fügemasse (Suspension) als Verbindungsmittel versehen. Es ist dabei darauf zu achten, daß die Kanäle nicht verschlossen werden. Es werden Platten mit Formschluß aufeinandergelegt.

Die Aufbringung der Suspension kann beispielsweise durch Siebdruck erfolgen; dadurch läßt sich eine gleichmäßige Schichtdicke erreichen.

Es ist möglich, als Suspensionen oxidische Systeme einzusetzen.

Beispielsweise kann eine Cordieritbeschichtung mit Cordierit als Verbindungsmaterial vorgesehen sein. Es wird dazu eine Mischung aus Cordieritpartikeln mit Korngröße im Mikrometer- bis Nanometerbereich mit Dispersionsmitteln und Bindemitteln verwendet. Es ist dabei darauf zu achten, daß nur Stoffe verwendet werden, die einen vergleichbaren thermischen Ausdehnungskoeffizienten wie die Beschichtung und die Matrix aufweisen, um Spannungen im Bauteil, die während der Abkühlung bei der Herstellung und auch bei der Anwendung bei entsprechenden hohen Temperaturen in Platten-Wärmeübertragern entstehen können, vermieden werden.

Insbesondere werden bei der Fügung entsprechende Anschlüsse fluchtend ausgerichtet, um so für eine Verbindbarkeit an Fluidzuführungen und Fluidabführungen sorgen zu können.

Anschließend wird ein keramischer Brand durchgeführt. Beispielsweise wird ein keramischer Brand an Luft oberhalb 1000°C durchgeführt, wobei das Dispersionsmittel verdampft, die Partikel versintern und dadurch eine keramische fluiddichte und insbesondere gasdichte Zwischenschicht ausgebildet wird, welche benachbarte Platten stoffschlüssig miteinander verbindet und dabei bei entsprechender Auftragung des Bindemittels auch für eine fluiddichte und insbesondere gasdichte Verbindung sorgt.

Es ist auch möglich, eine Verbindung zwischen benachbarten Platten durch Versinterung zu erzeugen. Es werden dazu beschichtete Platten eventuell unter der Zuhilfenahme von Sinteradditiven wie Selten-Erd-Oxiden unterhalb der Schmelztemperatur von Cordierit, wenn eine Cordieritbeschichtung vorgesehen ist, versintert.

Es ist auch möglich, einen Plattenstapel durch Verbindung und Staplung von Doppelplatten 102 (Figur 6) herzustellen. Eine Doppelplatte 102 setzt sich zusammen aus einer Platte 104 für ein erstes Fluid und insbesondere Prozeßgas und einer Platte 106 für ein zweites Fluid und insbesondere Rauchgas. Die Platten 104 und 106 werden wie oben beschrieben als Platten-Grünkörper mit integrierten Kanälen 108, 110 hergestellt. Die beiden Platten 104, 106 werden dann mittels einer Fügepaste 112 verbunden, wobei die Fügepaste 112 in einer Schicht auf die Oberfläche der Platte 104 aufgebracht wird, welche mit der Platte 106 zu verbinden ist. Eine entsprechende Oberfläche 114 der Platte 106 ist im wesentlichen eben ausgebildet.

Anschließend wird dieser Plattenverbund siliciert, wobei die Fügepastenschicht mit-siliciert wird.

Die äußeren Oberflächen 116, 118 der Doppelplatte 102 können, wenn das zweite Fluid Rauchgas ist, mit Rauchgas in Berührung kommen; die Kanäle 110 in der Platte 106 sind nach oben offen.

Auf diese äußeren Oberflächen 116, 118 einschließlich der Begrenzungsflächen der Kanäle 110 wird eine Korrosionsschutzschicht und insbesondere eine Cordieritschicht aufgebracht.

Die so hergestellten Doppelplatten 102 werden dann, wie oben beschrieben, stoffschlüssig miteinander verbunden, um über die Doppelplatten 102 einen Plattenstapel herzustellen. Die Fügung der Doppelplatten erfolgt beispielsweise über Verklebung mittels eines keramischen Verbindungsmittels oder über Sinterung.

Es ist grundsätzlich auch möglich, daß über Pyrolyse (Kohlenstoff-)Platten hergestellt werden, ohne zuvor die kanalbildenden Strukturen einzubringen. Die Kohlenstoffkörper werden dann (nach der Pyrolyse) bearbeitet, um kanalbildende Strukturen zu erzeugen. Beispielsweise erfolgt eine mechanische Bearbeitung wie eine Fräsbearbeitung und/oder eine Laserbearbeitung.

Der so hergestellte Kohlenstoffkörper mit den kanalbildenden Strukturen wird dann der Silicierung unterzogen.

Es ist grundsätzlich möglich, daß eine oder mehrere oder alle Platten des Wärmeübertrager aus Siliciumcarbid oder Siliciumnitrid hergestellt sind. Es kann sich dabei um monolithisches Siliciumcarbid oder monolithisches Siliciumnitrid handeln. Diese keramischen Materialien weisen Eigenschaften auf, die den Einsatz in einem Wärmeübertrager auch unter Hochtemperaturbedingungen ermöglichen. Insbesondere lassen sich Sicherheitsfaktoren einhalten.

Ein erfindungsgemäßer Wärmeübertrager kann beispielsweise als Regenerator oder Rekuperator ausgebildet sein. Ein weiteres mögliches Anwendungsgebiet ist beispielsweise eine Wärmeübertrager-Porenbrenner-Kombination, wobei insbesondere eine Porenstruktur des Porenbrenners integral mit dem Wärmeübertrager gebildet ist.

Es ist auch möglich, daß ein erfindungsgemäßer Wärmeübertrager im Zusammenhang mit der Wärmeübertragung zwischen chemisch aggressiven Flüssigkeiten oder Gasen wie beispielsweise Säuren oder Salzen eingesetzt wird.

## Patentansprüche

1. Platten-Wärmeübertrager, welcher eine Mehrzahl von Platten (32; 48) umfaßt, in welchen Kanäle (34; 54) gebildet sind, wobei die Platten (32; 48) aus einem mit Kurzfasern verstärkten Faserverbundwerkstoff hergestellt sind oder aus Siliciumcarbid hergestellt sind oder aus Siliciumnitrid hergestellt sind.

2. Platten-Wärmeübertrager nach Anspruch 1, **dadurch gekennzeichnet, daß** die Kurzfasern eine Länge aufweisen, welche kleiner ist als die kleinste geometrische Länge von Strukturen einer Platte (32; 48).

3. Platten-Wärmeübertrager nach Anspruch 1 oder 2, **dadurch gekennzeichnet, daß** die Länge der Kurzfasern kleiner ist als die kleinste geometrische Länge von die Kanäle (34; 54) bildenden Strukturen einer Platte (32; 48).

4. Platten-Wärmeübertrager nach einem der vorangehenden Ansprüche, **dadurch gekennzeichnet, daß** die Länge der Kurzfasern kleiner ist als ein Drittel der kleinsten geometrischen Länge von Strukturen einer Platte (32; 48).

5. Platten-Wärmeübertrager nach einem der vorangehenden Ansprüche, **dadurch gekennzeichnet, daß** die Länge der Kurzfasern kleiner als 1 mm ist.

6. Platten-Wärmeübertrager nach einem der vorangehenden Ansprüche, **dadurch gekennzeichnet, daß** die Länge der Kurzfasern zwischen 300 µm und 700 µm liegt.

7. Platten-Wärmeübertrager nach einem der vorangehenden Ansprüche, **dadurch gekennzeichnet, daß** der Platten-Wärmeübertrager ein Hochtemperatur-Wärmeübertrager ist.

8. Platten-Wärmeübertrager nach einem der vorangehenden Ansprüche, **gekennzeichnet durch** eine Rauchgasbeständigkeit und/oder eine Beständigkeit gegen chemisch aggressive Fluide.

9. Platten-Wärmeübertrager nach einem der vorangehenden Ansprüche, **dadurch gekennzeichnet, daß** der Faserverbundwerkstoff ein Keramikmaterial ist.

10. Platten-Wärmeübertrager nach einem der vorangehenden Ansprüche, **dadurch gekennzeichnet, daß** die Platten (32; 48) aus einem C/C-SiC-Faserkeramikmaterial hergestellt sind.

11. Platten-Wärmeübertrager nach einem der vorangehenden Ansprüche, **dadurch gekennzeichnet, daß** mindestens mit korrosiven Fluiden in Kontakt kommende Bereiche der Platten (32; 48) mit einer fluiddichten Korrosionsschutzschicht versehen sind.

12. Platten-Wärmeübertrager nach Anspruch 11, **dadurch gekennzeichnet, daß** die Korrosionsschutzschicht eine Cordieritschicht oder Yttriumsilikatschicht ist.

13. Platten-Wärmeübertrager nach einem der vorangehenden Ansprüche, **dadurch gekennzeichnet, daß** benachbarte Platten (38a, 38b; 60, 74) stoffschlüssig miteinander verbunden sind.

14. Platten-Wärmeübertrager nach Anspruch 13, **dadurch gekennzeichnet, daß** benachbarte Platten (38a, 38b; 60, 74) miteinander verklebt oder versintert sind.

15. Platten-Wärmeübertrager nach Anspruch 13 oder 14, **dadurch gekennzeichnet, daß** ein Verbindungsmaterial zur Verbindung benachbarter Platten (38a, 38b; 60, 74) ein Keramikmaterial ist.

16. Platten-Wärmeübertrager nach einem der vorangehenden Ansprüche, **dadurch gekennzeichnet, daß** eine einzelne Platte (32; 48) mindestens 15 Kanäle (34; 54) umfaßt.

17. Platten-Wärmeübertrager nach einem der vorangehenden Ansprüche, **dadurch gekennzeichnet, daß** getrennte Kanalsysteme für die Fluide vorgesehen sind, zwischen welchen ein Wärmeübertrag stattfinden soll.

18. Platten-Wärmeübertrager nach Anspruch 17, **dadurch gekennzeichnet, daß** Fluide für den Wärmeübertrag in getrennten Kanalsystemen in Gegenströmung geführt sind.

19. Platten-Wärmeübertrager nach Anspruch 16 oder 17, **dadurch gekennzeichnet, daß** eine Platte (38a) eines ersten Plattentyps ein Kanalsystem für ein erstes Fluid und eine benachbarte Platte (38b) eines zweiten Plattentyps ein Kanalsystem für ein zweites Fluid umfaßt.

20. Platten-Wärmeübertrager nach Anspruch 19, **dadurch gekennzeichnet, daß** Platten (38a, 38c) vom ersten Plattentyp und Platten (38b) vom zweiten Plattentyp alternierend aufeinanderfolgen.

21. Platten-Wärmeübertrager nach einem der vorangehenden Ansprüche, **dadurch gekennzeichnet, daß** in den Kanälen (34) Flossen (40) angeordnet sind und/oder die Kanäle (34) mittels Flossen (40) gebildet sind.

22. Platten-Wärmeübertrager nach Anspruch 21, **dadurch gekennzeichnet, daß** die Kanalstruktur eine Offset-Strip-Fin-Struktur hat.

23. Platten-Wärmeübertrager nach Anspruch 17, **dadurch gekennzeichnet, daß** in einer einzelnen Platte Kanäle (56) für ein erstes Fluid und getrennte Kanäle (58) für ein zweites Fluid gebildet sind.

24. Platten-Wärmeübertrager nach Anspruch 23, **dadurch gekennzeichnet, daß** Kanäle (56) für das erste Fluid und Kanäle (58) für das zweite Fluid benachbart sind.

25. Platten-Wärmeübertrager nach Anspruch 23 oder 24, **dadurch gekennzeichnet, daß** ein Kanal (56) in einer inneren Platte für das erste Fluid von vier Kanälen (58) für das zweite Fluid umgeben ist.

26. Platten-Wärmeübertrager nach einem der Ansprüche 23 bis 25, **dadurch gekennzeichnet, daß** eine einzelne Platte oder mehrere Platten (60, 74) gemeinsam einen Zuführungsanschluß (62) und Abführungsanschluß (80) für das Fluid aufweist, welche mit den Kanälen (70) für das erste Fluid verbunden sind.

27. Platten-Wärmeübertrager nach einem der Ansprüche 23 bis 26, **dadurch gekennzeichnet, daß** eine einzelne Platte oder mehrere Platten (60, 74) gemeinsam einen Zuführungsanschluß (64) und Abführungsanschluß (82) für das zweite Fluid aufweist, welche mit den Kanälen (72) für das zweite Fluid verbunden sind.

28. Platten-Wärmeübertrager nach Anspruch 26 oder 27, **dadurch gekennzeichnet, daß** jeweilige Zuführungsanschlüsse (62, 76; 64, 78) in den Platten (60, 74) fluchtend ausgerichtet sind.

29. Platten-Wärmeübertrager nach einem der Ansprüche 26 bis 28, **dadurch gekennzeichnet, daß** die jeweiligen Abführungsanschlüsse (66, 80; 68, 82) in den Platten (60, 74) fluchtend ausgerichtet sind.

30. Platten-Wärmeübertrager nach einem der vorangehenden Ansprüche, **dadurch gekennzeichnet, daß** die Platten (32; 48) gestapelt miteinander verbunden sind.

31. Platten-Wärmeübertrager nach einem der vorangehenden Ansprüche, **dadurch gekennzeichnet, daß** die Platten (32; 48) im wesentlichen quaderförmig sind.

32. Verfahren zur Herstellung eines Platten-Wärmeübertragers, bei dem Platten getrennt mittels eines mit Kurzfasern verstärkten Faserverbundwerkstoffes hergestellt werden.

33. Verfahren nach Anspruch 32, **dadurch gekennzeichnet, daß** in einen Platten-Ausgangskörper kanalbildende Strukturen eingepreßt werden.

34. Verfahren nach Anspruch 32, **dadurch gekennzeichnet, daß** der Platten-Ausgangskörper aus einer Faser-Harz-Mischung hergestellt wird.

35. Verfahren nach Anspruch 34, **dadurch gekennzeichnet, daß** die Faser-Harz-Mischung Zellulose als Additiv umfaßt.

36. Verfahren nach einem der Ansprüche 33 bis 35, **dadurch gekennzeichnet, daß** durch Aushärtung des Harzes aus dem Platten-Ausgangskörper ein Platten-Grünkörper hergestellt wird.

37. Verfahren nach Anspruch 36, **dadurch gekennzeichnet, daß** der Platten-Grünkörper zu einem Platten-Vorkörper pyrolysiert wird.

38. Verfahren nach Anspruch 37, **dadurch gekennzeichnet, daß** der Platten-Vorkörper ein C/C-Körper ist mit einer Kohlenstoffmatrix und einer Faserstruktur.

39. Verfahren nach Anspruch 37 oder 38, **dadurch gekennzeichnet, daß** der Platten-Vorkörper siliciert wird.

40. Verfahren nach Anspruch 39, **dadurch gekennzeichnet, daß** oberflächlich haftendes Silicium entfernt wird.

41. Verfahren nach Anspruch 39 oder 40, **dadurch gekennzeichnet, daß** die hergestellte Platte ein C/C-SiC-Körper ist.

42. Verfahren nach Anspruch 41, **dadurch gekennzeichnet, daß** Silicium und Siliciumcarbid in Relation zu den Kohlenstoffanteilen im Überschuß vorliegt.

43. Verfahren nach einem der Ansprüche 32 bis 42, **dadurch gekennzeichnet, daß** eine hergestellte Platte mindestens teilweise mit einer Korrosionsschutzschicht versehen wird.

44. Verfahren nach Anspruch 43, **dadurch gekennzeichnet, daß** die hergestellte Platte zumindest teilweise mit einer Cordieritschicht oder Yttriumsilikatschicht versehen wird.

45. Verfahren nach Anspruch 43 oder 44, **dadurch gekennzeichnet, daß** die Korrosionsschutzschicht mittels Plasmaspritzen aufgebracht wird.

46. Verfahren nach einem der Ansprüche 43 bis 45, **dadurch gekennzeichnet, daß** Platten miteinander verbunden werden.

47. Verfahren nach Anspruch 46, **dadurch gekennzeichnet, daß** bei der Herstellung von Platten in diesen Führungen integriert werden, über die Platten verbindbar und/oder stapelbar sind.

48. Verfahren nach Anspruch 46 oder 47, **dadurch gekennzeichnet, daß** Platten stoffschlüssig miteinander verbunden werden.

49. Verfahren nach einem der Ansprüche 46 bis 48, **dadurch gekennzeichnet, daß** ein keramisches Verbindungsmittel zur Verbindung zweier Platten verwendet wird.

50. Verfahren nach Anspruch 49, **dadurch gekennzeichnet, daß** Cordierit und/oder Yttriumsilikat verwendet wird.

51. Verfahren nach Anspruch 49 oder 50, **dadurch gekennzeichnet, daß** ein keramischer Brand zur Ausbildung einer Verbindungsschicht durchgeführt wird.

52. Verfahren nach einem der Ansprüche 46 bis 48, **dadurch gekennzeichnet, daß** Platten über Sintern verbunden werden.

53. Verfahren nach einem der Ansprüche 32 bis 52, **dadurch gekennzeichnet, daß** zwei Platten zu einer Doppelplatte verbunden werden.

54. Verfahren nach Anspruch 53, **dadurch gekennzeichnet, daß** die Doppelplatte siliciert wird.

55. Verfahren nach Anspruch 54, **dadurch gekennzeichnet, daß** eine Verbindungsschicht zur Verbindung der Platten siliciert wird.

56. Verfahren nach einem der Ansprüche 53 bis 55, **dadurch gekennzeichnet, daß** mit einer Korrosionsschutzschicht zu versehende Oberflächen außenliegende Oberflächen der Doppelplatte sind.

57. Keramischer Faserverbundwerkstoff, insbesondere für einen Platten-Wärmeübertrager, mit einer Faserstruktur und einer Matrixstruktur, wobei die Faserstruktur und die Matrixstruktur kohlenstoffbasiert sind, **dadurch gekennzeichnet, daß** die Faserstruktur mittels Kurzfasern gebildet ist.

58. Keramischer Faserverbundwerkstoff nach Anspruch 57, **dadurch gekennzeichnet, daß** die Kurzfasern eine Länge kleiner als 40 mm aufweisen.

59. Keramischer Faserverbundwerkstoff nach Anspruch 57 oder 58, **gekennzeichnet durch** eine Silicierung.

60. Keramischer Faserverbundwerkstoff nach Anspruch 59, **dadurch gekennzeichnet, daß** Siliciumcarbid gegenüber den Kohlenstoffanteilen im Überschuß vorliegt.

61. Keramischer Faserverbundwerkstoff nach einem der Ansprüche 57 bis 60, **dadurch gekennzeichnet, daß** eine Cordieritbeschichtung oder Yttriumsilikatbeschichtung vorgesehen ist.

62. Bauteil aus dem Werkstoff gemäß einem der Ansprüche 57 bis 61.

63. Bauteil nach Anspruch 62, **dadurch gekennzeichnet, daß** eine Oberflächenschicht eine Cordieritschicht oder eine Yttriumsilikatschicht ist.
